# EUROPÄISCHE PATENTSCHRIFT

(11) **EP 3 807 390 B1**
(45) Veröffentlichungstag und Bekanntmachung des Hinweises auf die Patenterteilung: **01.11.2023**
(21) Anmeldenummer: 19725686.0
(22) Anmeldetag: 17.05.2019
(51) Int. Cl.: C11D 17/04

(54) **PORTIONSEINHEIT EINES REINIGUNGSMITTELS**
PORTION UNIT OF A CLEANING AGENT
DOSE UNITAIRE D'UN PRODUIT DE NETTOYAGE

(30) Priorität: 15.06.2018 DE 102018209707
(43) Veröffentlichungstag der Anmeldung: 21.04.2021
(73) Patentinhaber: Henkel AG & Co. KGaA, 40589 Düsseldorf (DE)
(72) Erfinder: MEIER, Frank, 40589 Düsseldorf (DE); SUNDER, Matthias, 40593 Düsseldorf (DE); TREBBE, Uwe, 40547 Düsseldorf (DE)
(86) Internationale Anmeldenummer: PCT/EP2019/062770
(87) Internationale Veröffentlichungsnummer: WO 2019/238355

(56) Entgegenhaltungen:
- EP-A1- 2 902 473
- EP-A1- 2 927 307
- EP-A1- 2 927 307
- DE-A1-102004 062 328
- DE-A1-102014 014 767

## Beschreibung

Die vorliegende Erfindung betrifft eine Portionseinheit eines Reinigungsmittels, umfassend eine Reinigungsmittelzusammensetzung sowie eine die Reinigungsmittelzusammensetzung aufnehmende Kammer, wobei die Kammer ein Hauptvolumen und mindestens ein Nebenvolumen umfasst. Die Erfindung betrifft darüber hinaus ein Verfahren zur Herstellung einer solchen Portionseinheit.

Der Begriff Reinigungsmittel umfasst dabei im Sinne der Erfindung beliebige Wasch- und Reinigungsmittelzusammensetzungen, die unter anderem zum Gebrauch in einer Waschmaschine, einem und/oder einer Geschirrspülmaschine geeignet sind.

Reinigungsmittel in fester, pulverförmiger, wachsartiger, gelartiger und/oder flüssiger Form zur Verwendung in Waschmaschinen oder Geschirrspülern werden heute vielfach in vordosierten Portionseinheiten angeboten. Besonders benutzerfreundlich werden diese Portionseinheiten durch eine wasserlösliche Verpackung, mit welcher eine Einzeldosis des Reinigungsmittels unmittelbar in die Maschine gegeben werden kann. Die wasserlösliche Verpackung löst sich dann im Zuge des Reinigungsprozesses in der im wesentlichen wasserbasierten Reinigungsflotte auf und das Reinigungsmittel wird freigesetzt. Auf diese Weise kommt ein Benutzer nicht in Kontakt mit dem Reinigungsmittel, was als sehr vorteilhaft empfunden wird. Derartige Portionseinheiten mit wasserlöslicher Verpackung werden beispielsweise in der DE 10 2014 014 767 A1 beschrieben.

Zunächst sind Ein-Kammer-Systeme bekannt, bei denen eine Einzeldosis des Reinigungsmittels in einer einzigen, durch die wasserlösliche Verpackung gebildeten Kammer eingeschlossen ist. Die DE 10 2004 062328 A1 beschreibt in diesem Zusammenhang eine Einzeldosis-Portionseinheit mit einem wasserlöslichen Behälter, welcher in seinem Innenraum einen Reinigungsmittel-Formkörper mit wenigstens zwei voneinander getrennten Bereichen aufnimmt. Obwohl die dortige Portionseinheit nur einen einzigen Innenraum aufweist, können mittels der getrennten Formkörperbereiche unter Umständen auch verschiedene Reinigungsmittelzusammensetzungen vorgehalten werden.

Daneben sind beispielsweise aus der DE 10 2015 204 170 A1 und aus der WO 02/085736 A1 auch Mehr-Kammer-Systeme bekannt, bei denen die Verpackung mehrere voneinander getrennte Kammern aufweist, die jeweils mit einem Anteil der Reinigungsmitteldosis befüllt sind. Dabei kann es vorgesehen sein, dass alle Kammern des Mehr-Kammer-Systems mit der gleichen Reinigungsmittelzusammensetzung befüllt sind, es können aber auch unterschiedliche Komponenten des Reinigungsmittels in unterschiedlichen Kammern eingeschlossen sein.

Bei Mehr-Kammer-Systemen wird weiter unterschieden zwischen Verpackungen, bei denen die einzelnen Kammern nebeneinander angeordnet sind und solchen, bei denen die einzelnen Kammern zumindest teilweise übereinander angeordnet sind, wie etwa in der EP 2902473 A1 oder EP 2927307 A1 beschrieben. Bei Letzteren, die auch als kompakte Mehr-Kammer-Systeme bezeichnet werden, dient häufig eine größere Kammer als Basis, auf der mehrere, beispielsweise zwei oder drei, kleinere Kammern angeordnet werden. Die einzelnen Kammern sind dabei voneinander getrennt, so dass Reinigungsmittel nicht von einer Kammer in eine andere übertreten kann.

Es hat sich gezeigt, dass ein solches Mehr-Kammer-Design der Portionseinheiten vom Verbraucher als modern und ansprechend angesehen und daher vom Markt sehr gut aufgenommen wird.

Unabhängig davon hat sich jedoch auch gezeigt, dass derartig ausgebildete Portionseinheiten in der Anwendung mit diversen Nachteilen behaftet sind. So ist der Verbrauch an Verpackungsmaterial für Mehr-Kammer-Systeme um durchschnittlich 10 bis 50 % höher als für Ein-Kammer-Systeme mit gleichem Füllvolumen. Für ein Ein-Kammer-System wird in der Regel ein erster Folienabschnitt in einem Vakuum-Tiefziehverfahren zu einem Aufnahmevolumen ausgebildet, welches sodann mit der Reinigungsmittelzusammensetzung befüllt wird. Abschließend wird das Aufnahmevolumen durch einen als Deckelelement dienenden zweiten Folienabschnitt verschlossen, indem der zweite Folienabschnitt in einem Randbereich mit dem Aufnahmevolumen versiegelt wird. Für ein kompaktes Mehr-Kammer-System, bei welchem die einzelnen Kammern übereinander angeordnet sind, wird demgegenüber mindestens ein weiterer Folienabschnitt benötigt, durch welchen die einzelnen Kammern voneinander getrennt werden. Bei Mehr-Kammer-Systemen, bei denen die einzelnen Kammern nebeneinander angeordnet sind, sind ausreichend breite Siegelnähte zwischen den einzelnen Kammern erforderlich, um eine zuverlässige Trennung der Kammern zu bewirken. Auch hierdurch steigt der Verbrauch an Folienmaterial gegenüber Ein-Kammer-Systemen deutlich an.

Neben dem größeren Materialverbrauch weisen insbesondere Mehr-Kammer-Systeme mit nebeneinander angeordneten Kammern den weiteren Nachteil auf, dass sie vergleichsweise groß sind und gegenüber Portionseinheiten mit kleineren Abmessungen ein ungünstiges Bewegungsverhalten in der Waschmaschine zeigen. So hat sich gezeigt, dass sich große Portionseinheiten innerhalb der Waschmaschine vermehrt auf der Gummidichtung oder im Spalt der Gummidichtung unterhalb der Ladeluke festsetzen. Dort werden sie, wenn überhaupt, nur von einer geringen Menge an wasserbasierter Reinigungsflotte umspült und es fehlt eine ausreichende mechanische Einwirkung durch das Reinigungsgut, wie sie im Inneren des Reinigungsraumes (z. B. Waschtrommel) gegeben ist. Aufgrund dieser Umstände löst sich die Folienverpackung einer solchermaßen festgesetzten Portionseinheit oftmals nicht in der vorgesehenen Zeit auf und es verbleiben unerwünschte Rückstände von Reinigungsmittel und/oder Folienverpackung im Bereich der Gummidichtung.

Schließlich neigen Mehr-Kammer-Systeme mit nebeneinander angeordneten Kammern durch die große Oberfläche dazu, auf der Reinigungsflottenoberfläche zu treiben oder auf dem Reinigungsgut "aufzureiten", was dazu führt, dass die mechanische Einwirkung der Reinigungsflotte und des Reinigungsgutes auf die Portionseinheiten sehr gering ist. Hierdurch wird die Auflösung der Folienverpackung verzögert, wodurch das Reinigungsmittel unter Umständen nicht zum richtigen Zeitpunkt innerhalb eines Reinigungsprogrammes freigesetzt wird. Auch können Reste der Folienverpackung in der Reinigungsflotte und unter Umständen auf dem Reinigungsgut verbleiben, da die Auflösung der Folienverpackung zu langsam erfolgt.

Eine Aufgabe der vorliegenden Erfindung besteht daher in der Bereitstellung einer Portionseinheit eines Reinigungsmittels, welche ein ansprechendes, modernes Design aufweist und durch welche die Nachteile des Standes der Technik überwunden werden. Eine weitere Aufgabe der Erfindung besteht in der Angabe eines Herstellungsverfahrens für eine derartige Portionseinheit.

Die Aufgabe wird gelöst durch eine Portionseinheit eines Reinigungsmittels mit den Merkmalen des Patentanspruchs 1 sowie durch ein Verfahren zur Herstellung einer Portionseinheit eines Reinigungsmittels gemäß Patentanspruch 12.

Vorteilhafte Ausgestaltungen und Weiterbildungen der Erfindung sind Gegenstand der Unteransprüche.

Gemäß Patentanspruch 1 handelt es sich bei der Erfindung um eine Portionseinheit eines Reinigungsmittels, umfassend eine Reinigungsmittelzusammensetzung sowie eine die Reinigungsmittelzusammensetzung aufnehmende Kammer mit einer die Kammer begrenzenden Kammerwandung einer Schichtdicke D, wobei die Kammer ein Hauptvolumen und mindestens ein Nebenvolumen umfasst und wobei die Reinigungsmittelzusammensetzung frei von dem Hauptvolumen in das mindestens eine Nebenvolumen eintreten kann und umgekehrt und wobei die Kammerwandung in einem Übergangsbereich zwischen dem Hauptvolumen und dem mindestens einen Nebenvolumen im Wesentlichen stufenförmig ausgebildet ist.

Mit anderen Worten zeichnet sich die erfindungsgemäße Portionseinheit dadurch aus, dass sie zwar als Ein-Kammer-System ausgebildet ist, gleichzeitig jedoch neben dem optischen Erscheinungsbild weitere Detailmerkmale eines Mehr-Kammer-Systems aufweist. Gemäß Patentanspruch 1 weist die Portionseinheit eine Kammer für die Aufnahme einer Reinigungsmittelzusammensetzung auf, wobei die Kammer ein Hauptvolumen und mindestens ein Nebenvolumen umfasst. Diese mindestens zwei Teilvolumina sind jedoch nicht durch eine Wand oder ähnliches voneinander getrennt, vielmehr kann die Reinigungsmittelzusammensetzung grundsätzlich frei zwischen dem Hauptvolumen und dem mindestens einen Nebenvolumen fließen. Die Kammerwandung ist dabei in einem Übergangsbereich zwischen dem Hauptvolumen und dem mindestens einen Nebenvolumen im Wesentlichen stufenförmig ausgebildet. Auf diese Weise können das Hauptvolumen und das mindestens eine Nebenvolumen von einem Verbraucher optisch als separate Volumina wahrgenommen werden. Eine erfindungsgemäße Portionseinheit bietet damit rein äußerlich das ansprechende Design eines Mehr-Kammer-Systems, verhält sich aufgrund der im Inneren durchlässigen Struktur im Gebrauch und bei Befüllung mit einer im Wesentlichen homogenen Reinigungsmittelzusammensetzung jedoch im Wesentlichen wie ein Ein-Kammer-System. Im Hinblick auf Materialverbrauch und rückstandsfreie Löslichkeit ist die erfindungsgemäße Portionseinheit damit klassischen Mehr-Kammer-Systemen überlegen. Weiterhin bietet eine solche Portionseinheit mit wenigstens einem Nebenvolumen aufgrund er besseren Griffigkeit Vorteile bei der Anwendungs-Handhabung.

Die Kammerwandung ist in einem Übergangsbereich zwischen dem Hauptvolumen und dem mindestens einen Nebenvolumen erfindungsgemäß im Wesentlichen stufenförmig ausgebildet. Eine solche stufenförmige Ausbildung kann beispielsweise in einem Vakuum-Tiefziehverfahren bei Verwendung einer Tiefziehform mit entsprechend stufenförmig ausgebildetem Bodenbereich erzeugt werden. Eine entsprechende Stufe oder Vertiefung im Boden einer Tiefziehform kann dabei unter einem Winkel von etwa 90° aus dem Bodenbereich hervortreten, es können jedoch auch Winkel kleiner oder größer 90°, vorzugsweise zwischen 45 ° und 135°, ausgeformt sein. Entsprechend kann bei der erfindungsgemäßen Portionseinheit der Übergangsbereich zwischen dem Haupt- und dem mindestens einen Nebenvolumen unterschiedlich prägnant ausgebildet sein. Hierbei ist zu berücksichtigen, dass selbst bei rechtwinkliger Stufe in der Tiefziehform der Übergang zwischen den beiden in Rede stehenden Bereichen bei der fertigen Portionseinheit aufgrund der Elastizität des Materials für die Kammerwandung und der damit verbundenen Rückstellkräfte nach Entnahme aus der Tiefziehform im Allgemeinen von der exakt rechtwinkligen Form abweicht. Unter einer im Wesentlichen stufenförmigen Ausbildung des Übergangsbereichs zwischen dem Hauptvolumen und dem mindestens einen Nebenvolumen soll hier verstanden werden, dass die Kammerwandung im Bereich des mindestens einen Nebenvolumens zumindest deutlich sichtbar gegenüber der Kammerwandung im Bereich des Hauptvolumens räumlich hervortritt, so dass ein Betrachter den optischen Eindruck mehrerer Teilvolumina gewinnt, wobei das mindestens eine Nebenvolumen räumlich aus dem Hauptvolumen zumindest partiell herausragt. Das zumindest eine räumlich gegenüber dem Hauptvolumen hervortretende Nebenvolumen vergrößert damit zunächst die Außenoberfläche der Portionseinheit und erleichtert damit die Löslichkeit der die umschließende Außenwand bildenden wasserlöslichen Folie. Weiterhin sorgt das zumindest eine räumlich hervortretende Nebenvolumen für eine verbesserte Griffigkeit der Portionseinheit und erleichtert somit deren Handhabung.

Der Materialverbrauch für eine erfindungsgemäße Portionseinheit ist geringer als der für ein klassisches Mehr-Kammer-System und entspricht im Wesentlichen dem für ein herkömmliches Ein-Kammer-System mit gleichem Füllvolumen und gleichen Abmessungen, da vorteilhaft auf eine zusätzliche Folienschicht und/oder Siegelnähte zwischen einzelnen Kammern verzichtet werden kann. Zur Herstellung der erfindungsgemäßen Portionseinheit werden lediglich zwei Folienschichten benötigt.

Vergleichsversuche haben gezeigt, dass das Verhalten der erfindungsgemäßen Portionseinheit in der Waschmaschine den aus dem Stand der Technik bekannten Mehr-Kammer-Systemen im Hinblick auf die Löslichkeit und Materialrückstände überlegen ist, was nachfolgend anhand von Vergleichsbeispielen noch genauer ausgeführt werden wird.

Gemäß einer Ausgestaltung des Erfindungsgedankens ist das mindestens eine Nebenvolumen als Ausstülpung in der Kammerwandung ausgebildet, wobei die maximale Höhe H der Ausstülpung mindestens das Fünffache der Schichtdicke D der Kammerwandung beträgt. Als Höhe H der Ausstülpung wird dabei die Höhe H der Ausstülpung gegenüber der nichtausgestülpten Kammerwandung verstanden. Damit unterscheidet sich die erfindungsgemäße Ausstülpung in der Kammerwandung klar von einer einfachen Prägung oder Markierung der Kammerwandung, die im Allgemeinen nicht über das ein- bis zweifache der Schichtdicke D hinausgeht. Unter der Schichtdicke D wird hier die Wandstärke der Kammerwandung der fertigen Portionseinheit verstanden. Diese weicht in der Regel ab von der Dicke der in einem Vakuum-Tiefziehverfahren als Ausgangsmaterial verwendeten Folie, da der Umformungsprozess im Allgemeinen mit einer Verstreckung des Ausgangsmaterials einhergeht. Die Schichtdicke D wird dabei so eingestellt, dass sich die Ausstülpungen in der Kammerwandung nach Entnahme der fertigen Portionseinheit aus der Tiefziehform nicht oder zumindest nicht wesentlich wieder einziehen. Geeignete Schichtdicken D liegen je nach konkretem Material im Bereich von etwa 70 bis 120 µm.

Es kann auch vorgesehen sein, dass die maximale Höhe H der Ausstülpung mindestens das zehnfache der Schichtdicke D der Kammerwandung beträgt. Bei einer angenommenen Schichtdicke D von etwa 100 µm beträgt die maximale Höhe H der Ausstülpung damit mindestens 1 mm. Die maximale Höhe H der Ausstülpung kann auch mehrere Millimeter betragen.

Eine Ausführung der Erfindung sieht vor, dass das mindestens eine Nebenvolumen einen Anteil von 1 - 30 % eines Gesamtvolumens, bestehend aus dem Hauptvolumen und dem mindestens einen Nebenvolumen, umfasst. Bevorzugt ist vorgesehen, dass das mindestens eine Nebenvolumen einen Anteil von 1 - 15 % des Gesamtvolumens umfasst. Das Gesamtvolumen der Kammer setzt sich zusammen aus dem Hauptvolumen und dem mindestens einen Nebenvolumen. Im Falle eines einzigen Nebenvolumens setzt sich das Gesamtvolumen aus dem Hauptvolumen und dem Nebenvolumen zusammen und das Nebenvolumen umfasst einen Anteil von 1 - 10 % bevorzugt 1 - 5 % des Gesamtvolumens. Im Falle mehrerer Nebenvolumina setzt sich das Gesamtvolumen aus dem Hauptvolumen und der Gesamtheit der Nebenvolumina zusammen und die Gesamtheit der Nebenvolumina umfasst einen Anteil von 1 - 30 % bevorzugt 3 - 15 % des Gesamtvolumens.

In einer Ausführung der Erfindung umfasst die Kammer zwei oder mehr Nebenvolumina. Diese können nebeneinander auf der gleichen Seite der Portionseinheit und/oder auf einander gegenüberliegenden Seiten der Portionseinheit angeordnet sein. Bei einer Herstellung der Portionseinheit in einem Vakuum-Tiefziehverfahren, wie sie im Folgenden noch detaillierter beschrieben werden wird, wird aus einem ersten Folienabschnitt ein Aufnahmevolumen gebildet und aus einem zweiten Folienabschnitt ein Deckelelement gebildet. Das Aufnahmevolumen und das Deckelelement bilden gemeinsam die Kammer aus, die Kammerwandung wird von dem ersten und zweiten Folienabschnitt gebildet. Die erfindungsgemäßen Nebenvolumina können dabei vorzugsweise im Bereich des Aufnahmevolumens ausgebildet sein, sie können jedoch auch im Bereich des Deckelelements oder sowohl im Bereich des Aufnahmevolumens als auch im Bereich des Deckelelements ausgebildet sein. Auch im Falle eines einzigen Nebenvolumens kann dieses entweder im Bereich des Aufnahmevolumens oder im Bereich des Deckelelements ausgebildet sein. Die Anzahl der Nebenvolumina kann grundsätzlich in einem Bereich von eins bis zehn liegen. Vorzugsweise liegt diese Anzahl in einem Bereich von drei bis fünf.

Dabei kann es gemäß einem weiteren Gedanken der Erfindung vorgesehen sein, dass die Gesamtheit der Nebenvolumina derart ausgeformt ist, dass sie keinerlei Spiegelsymmetrie aufweist. In diesem Fall können die Nebenvolumina günstiger vom Wasser umspült werden, was im Hinblick auf die Löslichkeit des Produktes vorteilhaft ist. Bei einem einzigen Nebenvolumen kann dieses eine Form aufweisen, die keinerlei Spiegelsymmetrie besitzt, beispielsweise die eines unsymmetrischen Tropfens. Bei mehreren Nebenvolumina können alle Nebenvolumina in ihrer Form jeweils so ausgeführt sein, dass sie keine Spiegelsymmetrie besitzen. Die Nebenvolumina können jedoch auch derart ausgeformt sein, dass zwar einzelne Nebenvolumina eine Spiegelsymmetrie aufweisen, die Gesamtheit der Nebenvolumina aber ohne Spiegelsymmetrie ist. Die Gesamtheit der Nebenvolumina kann dabei durchaus eine Punktsymmetrie aufweisen. Unter der Form eines Nebenvolumens wird eine Projektion des jeweiligen Volumens in eine Ebene parallel zur Grenzfläche zwischen Aufnahmevolumen und Deckelelement verstanden.

Die Grundform der Portionseinheit kann grundsätzlich beliebig ausgebildet sein. Gemäß einer Ausgestaltung kann die Portionseinheit eine im Wesentlichen dreieckige Grundform aufweisen. Sie kann jedoch auch eine im Wesentlichen kreisförmige, rechteckige, quadratische oder eine beliebig geschwungene Grundform aufweisen. Unter der Grundform wird dabei eine Projektion der Portionseinheit in eine Ebene parallel zur Grenzfläche zwischen Aufnahmevolumen und Deckelelement verstanden.

Eine vorteilhafte Ausgestaltung der Erfindung sieht vor, dass die Kammerwandung ein wasserlösliches Material umfasst, insbesondere eine wasserlösliche Folie. In diesem Fall kann die Portionseinheit als Ganzes in die Waschmaschine oder den Geschirrspüler gegeben werden, ohne dass die Verpackung zuvor entfernt werden müsste. Das wasserlösliche Material kann ein Polymer, ein Copolymer oder Mischungen dieser umfassen. Wasserlösliche Polymere im Sinne der Erfindung sind solche Polymere, die bei Raumtemperatur in Wasser zu mehr als 2,5 Gew.-% löslich sind.

Das wasserlösliche Material kann ein Polyvinylalkohol-Copolymer (PVA) umfassen. PVA ist ein thermoplastischer Kunststoff und eignet sich von daher sehr gut für die Verarbeitung in einem Thermoformverfahren, insbesondere in einem Vakuum-Tiefziehverfahren. Es weist darüber hinaus eine sehr gute Wasserlöslichkeit auf. Das wasserlösliche Material kann Mischungen unterschiedlicher Substanzen umfassen. Solche Mischungen ermöglichen die Einstellung der mechanischen Eigenschaften der Kammerwandung und können den Grad der Wasserlöslichkeit beeinflussen.

Gemäß einer Ausführung der Erfindung wird die erfindungsgemäße Portionseinheit in einem Vakuum-Tiefziehverfahren, im Folgenden kurz auch als Tiefziehverfahren bezeichnet, hergestellt. Durch Verwendung einer Tiefziehform mit einem stufenförmig ausgebildeten Bodenbereich können die Nebenvolumina ausgebildet werden. Der Bodenbereich der Tiefziehform ist dazu mit stufenförmigen Vertiefungen entsprechend der gewünschten Anzahl und Form der Nebenvolumina versehen.

Gemäß Patentanspruch 15 beschreibt die Erfindung auch ein Verfahren zur Herstellung einer Portionseinheit eines Reinigungsmittels gemäß einem der Ansprüche 1 bis 14, umfassend die folgenden Schritte:
- Vorheizen eines ersten wasserlöslichen Folienabschnitts über einer Tiefziehform, deren Boden mindestens eine stufenförmige Vertiefung aufweist;
- Anlegen eines Unterdrucks, dadurch Einsaugen des vorgeheizten Folienabschnittes in die Tiefziehform und Ausbildung eines Aufnahmevolumens aus dem ersten wasserlöslichen Folienabschnitt, wobei das Aufnahmevolumen ein Hauptvolumen und mindestens ein Nebenvolumen umfasst;
- Einfüllen einer Reinigungsmittelzusammensetzung in das Aufnahmevolumen;
- Auflegen eines Deckelelements aus einem zweiten wasserlöslichen Folienabschnitt auf das befüllte Aufnahmevolumen;
- Verschweißen des Deckelelements durch Feuchtigkeit und/oder Temperatur mit dem Aufnahmevolumen in einem Randbereich, derart, dass das Hauptvolumen und das mindestens eine Nebenvolumen miteinander kommunizieren können;
- Herausnehmen der Portionseinheit aus der Tiefziehform.

Zur Herstellung der erfindungsgemäßen Portionseinheit werden somit lediglich zwei Folienabschnitte benötigt, wobei aus einem ersten Folienabschnitt ein Aufnahmevolumen und aus einem zweiten Folienabschnitt ein Deckelelement gebildet wird. Im Gegensatz dazu werden zur Herstellung eines aus dem Stand der Technik bekannten kompakten Mehr-Kammer-Systems mindestens drei Folienabschnitte benötigt.

Es kann erfindungsgemäß vorgesehen sein, dass auch in dem Deckelelement in einem vorangehenden Verfahrensschritt in einem Tiefziehverfahren ein oder mehrere Nebenvolumina ausgebildet werden, bevor das Deckelelement auf das Aufnahmevolumen aufgelegt wird. Auf diese Weise ist eine Portionseinheit herstellbar, welche auf zwei einander gegenüberliegenden Seiten Nebenvolumina in der Kammerwandung aufweist.

Bei der in das Aufnahmevolumen der Portionseinheit einzufüllenden mindestens einen Reinigungsmittelzusammensetzung kann es sich grundsätzlich um eine feste, pulverförmige, wachsartige, gelartige oder flüssige Zusammensetzung und/oder um Mischungen derartiger Zusammensetzungen handeln. Hierbei werden flüssige Reinigungsmittelzusammensetzungen häufig bevorzugt, wenn es vor allem auf besonders rasche Löslichkeit ankommt, wie es beispielsweise bei Textilwaschprozessen der Fall ist. Formstabile Reinigungsmittelzusammensetzungen, wie fest, pulverförmige, wachsartige, gelartige Zusammensetzungen, haben andererseits den Vorteil, dass sie bestimmte Aktivsubstanzen besonders gut aufnehmen können. Insofern lassen sich die geeigneten Reinigungsmittelzusammensetzungen bzw. deren Darreichungsformen je nach Anwendungsfall gezielt auswählen und kombinieren. Beispiele solcher Zusammensetzungen werden nachfolgend genannt.

Gemäß einer bevorzugten Ausgestaltungsform der Erfindung kann es vorgesehen sein, die Portionseinheit mit einer Kombination von Reinigungsmittelzusammensetzungen unterschiedlicher Darreichungsform (z. B. fest, pulverförmig, wachsartig, gelartig, flüssig) zu befüllen. Hierbei lassen sich als Füllung für die Kammer der Portionseinheit vor allem mehrere Reinigungsmittelzusammensetzungen mit formstabiler Darreichungsform frei miteinander kombinieren. Beispielsweise können als Füllgut für die Portionseinheit zwei oder mehrere Reinigungsmittelzusammensetzungen mit fester oder pulverförmiger Darreichungsform mit wachs- oder gelartigen Reinigungsmittelzusammensetzungen kombiniert werden. Dies hat den Vorteil, dass sich durch die mehreren Reinigungsmittelzusammensetzungen mit unterschiedlicher Darreichungsform völlig neuartige Erscheinungsformen sowie ggf. Wirkeffekte für die Portionseinheit ergeben bzw. gezielt einstellen lassen. Voll allem bei entsprechend hoher Packdichte der einzelnen Reinigungsmittelzusammensetzungen innerhalb der Kammer der Portionseinheit führt dies dazu, dass sich die Reinigungsmittelzusammensetzungen unterschiedlicher Darreichungsform nicht miteinander vermischen sondern vielmehr getrennt voneinander in der Portionseinheit vorliegen. Folglich sind die Reinigungsmittelzusammensetzungen mit unterschiedlicher Darreichungsform vergleichbar zu mehreren Phasen jeweils voneinander getrennt neben- und/oder übereinanderliegend innerhalb der Portionseinheit angeordnet.

Im Sinne einer Weiterentwicklung des vorherigen Erfindungsansatzes erweist es sich als sinnvoll das Hauptvolumen der Portionseinheit mit einer ersten Reinigungsmittelzusammensetzung zu füllen, während das mindestens eine Nebenvolumen mit wenigstens einer anderen, dazu unterschiedlichen Reinigungsmittelzusammensetzung befüllt ist. Dadurch lassen sich sowohl was die Wirkeffekte angeht als auch was die Erscheinungsform angeht Vorteile erzielen. Weiterhin bevorzugt ist das Hauptvolumen der Portionseinheit mit einer ersten Reinigungsmittelzusammensetzung mit einer ersten Darreichungsform gefüllt, während das mindestens eine Nebenvolumen mit wenigsten einer zweiten Reinigungsmittelzusammensetzung mit wenigstens eine anderen, dazu unterschiedlichen Darreichungsform befüllt ist. Insbesondere ist das Hauptvolumen der Portionseinheit mit einer ersten Reinigungsmittelzusammensetzung mit einer ersten Darreichungsform befüllt, während alle je nach Anwendungsfall vorhandenen Nebenvolumina mit anderen, dazu unterschiedlichen Reinigungsmittelzusammensetzungen mit einer zweiten Darreichungsform befüllt sind. Beispielsweise ist das Hauptvolumen mit einer festen oder pulverförmigen Reinigungsmittelzusammensetzung befüllt und alle je nach Anwendungsfall vorhandenen Nebenvolumina sind mit gel- oder wachsartigen Reinigungsmittelzusammensetzungen befüllt. Vor allem auch als Folge der erfindungsgemäßen Gestaltung des Hauptvolumens und des zumindest einen Nebenvolumens sind die mehreren Reinigungsmittelzusammensetzungen mit unterschiedlicher Darreichungsform sauber getrennt voneinander jedoch gleichzeitig gemeinsam in der einen Kammer der Portionseinheit untergebracht. Selbstverständlich sind neben der beispielhaft genannten auch andere Kombinationen von mehreren Reinigungsmittelzusammensetzungen mit unterschiedlichen Darreichungsformen in Haupt- und Nebenvolumen der Portionseinheit denkbar. Auf diesem Wege lassen sich zunächst Portionseinheiten mit besonders ansprechendem Erscheinungsbild erhalten. Weiterhin können einzelnen Zonen unterschiedlicher Reinigungsmittelzusammensetzung innerhal der Portionseinheit für verschiedene Wirkeffekte der Portionseinheit verantwortlich sein. Beispielsweise kann jede einzelne Reinigungsmittelzusammensetzung gezielt für bestimmte Reinigungseffekte der gesamten Reinigungswirkung ausgelegt werden. Darüber hinaus weisen erfindungsgemäße Portionseinheiten mit der besonderen Gestaltung der Kammerwandung sowie unterschiedlichen vor allem formstabilen Reinigungsmittelzusammensetzungen innerhalb der Kammer Vorteile hinsichtlich der Festigkeit der Portionseinheit auf.

Im Folgenden wird die Erfindung anhand von Ausführungsbeispielen und unter Bezugnahme auf die beigefügten Zeichnungen näher erläutert. Es zeigen:
- Figur 1:: ein Ausführungsbeispiel einer erfindungsgemäßen Portionseinheit in perspektivischer Ansicht;
- Figur 2:: ein Ausführungsbeispiel einer erfindungsgemäßen Portionseinheit in einer Schnittansicht;
- Figur 3:: Beispiel einer für die Herstellung einer erfindungsgemäßen Portionseinheit geeigneten Tiefziehform in schematischer Schnittansicht;
- Figuren 4a - 4e:: beispielhafte Ausgestaltungen einer erfindungsgemäßen Portionseinheit in schematischer Draufsicht;

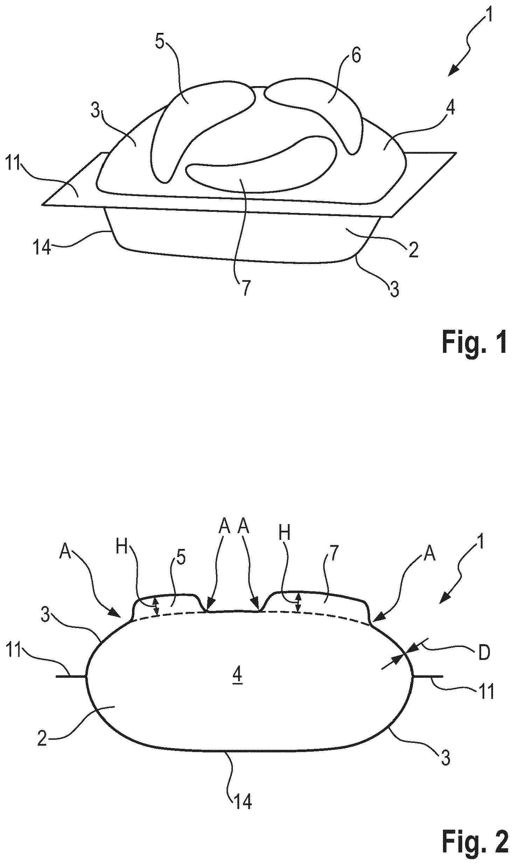

Figur 1 zeigt ein Ausführungsbeispiel einer im Ganzen mit 1 bezeichneten erfindungsgemäßen Portionseinheit in einer perspektivischen Ansicht. Die Portionseinheit 1 umfasst eine Kammer 2, in der eine hier nicht dargestellte Reinigungsmittelzusammensetzung enthalten ist. Die Kammer 2 wird von einer Kammerwandung 3 begrenzt, die aus einer wasserlöslichen Kunststofffolie gefertigt ist. Die Kammerwandung 3 ist, wie im Zusammenhang mit dem Herstellungsverfahren noch näher erläutert werden wird, aus zwei Folienabschnitten gefertigt, wobei aus einem ersten Folienabschnitt die in der Darstellung der Figur 1 obere Hälfte der Portionseinheit 1 gefertigt ist, während aus einem zweiten Folienabschnitt die in der Darstellung der Figur 1 untere Hälfte der Portionseinheit 1, die im Folgenden auch als Deckelelement 14 bezeichnet wird, gefertigt ist. Die beiden Folienabschnitte sind im Bereich eines Siegelrandes 11 miteinander verschweißt.

Die Kammerwandung 3 weist eine Schichtdicke D von 90 µm auf. Die Kammer 2 umfasst ein Hauptvolumen 4 und drei Nebenvolumina 5, 6 und 7. Die in der Kammer 2 enthaltene Reinigungsmittelzusammensetzung kann grundsätzlich frei von dem Hauptvolumen 4 in die Nebenvolumina 5, 6 und 7 eintreten und umgekehrt, da die Nebenvolumina 5, 6 und 7 nicht durch eine physikalische Trennvorrichtung, sprich eine Wand oder ähnliches, von dem Hauptvolumen 4 abgetrennt sind.

Dies wird besser deutlich aus der Darstellung der Figur 2, die ein Ausführungsbeispiel einer erfindungsgemäßen Portionseinheit 1 in einer Schnittansicht zeigt. Hier wird deutlich, dass eine in der Kammer 2 aufgenommene, hier nicht dargestellte Reinigungsmittelzusammensetzung, grundsätzlich frei zwischen den Volumina 4, 5-7 (Nebenvolumen 6 in Schnittansicht gemäß Figur 2 nicht gezeigt) fließen kann, da zwischen dem Haupt- und dem mindestens einen Nebenvolumen keine physikalischen Trennelemente vorgesehen sind. Gestrichelte Linien zwischen dem Hauptvolumen 4 und den Nebenvolumina 5-7 deuten hier lediglich an, in welchem Bereich das Hauptvolumen 4 in die Nebenvolumina 5-7 übergeht. Die erfindungsgemäße Portionseinheit 1 weist in diesen Bereichen jedoch keinerlei physikalische Abtrennung zwischen den einzelnen Volumina 4-7 auf.

Die Kammerwandung 3 ist in einem Übergangsbereich zwischen dem Hauptvolumen 4 und den Nebenvolumina 5, 6 und 7 im Wesentlichen stufenförmig ausgebildet. Auch dies ist am besten aus Figur 2 ersichtlich, in der der Übergangsbereich zwischen dem Hauptvolumen 4 und den Nebenvolumina 5-7 jeweils mit A gekennzeichnet ist. Aufgrund der stufenförmigen Ausbildung der Kammerwandung 3 in den Übergangsbereichen A weist die Portionseinheit rein äußerlich ein optisches Erscheinungsbild ähnlich dem eines klassischen Mehr-Kammer-Systems auf, da die unterschiedlichen Teilvolumina als solche wahrgenommen werden können. Insbesondere treten die Nebenvolumina 5-7 aus dem Hauptvolumen 4 räumlich heraus, so dass die Außenwandungen der Nebenvolumina 5-7 die Außenwand des Hauptvolumens proximal überragen.

Die Nebenvolumina 5, 6 und 7 sind als Ausstülpungen in der Kammerwandung 3 ausgebildet, wobei die maximale Höhe H der Ausstülpungen jeweils mehr als das 10fache der Schichtdicke D der Kammerwandung 3 beträgt.

Bei dem in der Figur 1 dargestellten Ausführungsbeispiel umfassen die Nebenvolumina 5, 6 und 7 zusammen etwa 10 % des Gesamtvolumens der Kammer 3, wobei das Gesamtvolumen der Kammer 3 sich aus dem Hauptvolumen 4 und den Nebenvolumina 5, 6 und 7 zusammensetzt.

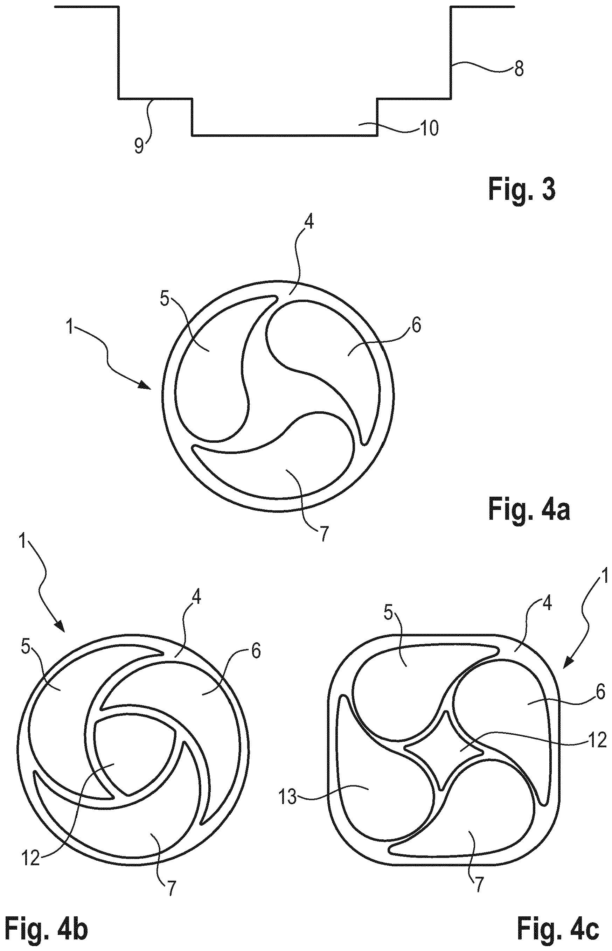

Die dargestellten Portionseinheiten können in einem Tiefziehverfahren hergestellt werden. Figur 3 zeigt eine hierfür geeignete Tiefziehform 8 in einer prinzipiellen Schnittansicht. Die Tiefziehform 8 weist einen Boden 9 auf, der zumindest eine stufenförmige Vertiefung 10 für jedes zugehörige Nebenvolumen umfasst. Die hier dargestellte Tiefziehform 8 weist im Boden 9 lediglich eine einzige Vertiefung 10 auf, so dass sie geeignet ist zur Herstellung einer Portionseinheit mit lediglich einem Nebenvolumen. Zur Ausbildung mehrerer Nebenvolumina, wie beispielsweise in den Figuren 1 und 2 gezeigt, werden Tiefziehformen verwendet, die mehrere Vertiefungen 10 im Bodenbereich 9 aufweisen.

Die Herstellung einer Portionseinheit 1 erfolgt dabei folgendermaßen: Zunächst wird ein erster wasserlöslicher Folienabschnitt in eine Tiefziehform 8, wie sie beispielsweise in Figur 3 dargestellt ist und deren Boden 9 mindestens eine stufenförmige Vertiefung 10 aufweist, eingelegt. Sodann wird die Tiefziehform 8 aufgeheizt und es wird ein Unterdruck angelegt. Hierdurch legt sich der Folienabschnitt innen an die Formwandung an, so dass ein Aufnahmevolumen, umfassend ein Hauptvolumen 4 und mindestens ein Nebenvolumen 5, 6, 7, ausgebildet wird. In das Aufnahmevolumen wird zumindest eine Reinigungsmittelzusammensetzung eingefüllt. Wie schon weiter oben erwähnt können hierbei auch bevorzugt mehrere, vor allem auch unterschiedliche Reinigungsmittelzusammensetzungen, insbesondere auch mit verschiedener Darreichungsform eingefüllt werden. Da sich Reinigungsmittelzusammensetzungen mit unterschiedlicher vor allem formstabiler Darreichungsform, wie z. B. feste, pulverförmige, gelartige, wachsartige Reinigungsmittelzusammensetzungen, in der Regel nicht innerhalb der Portionseinheit 1 vermischen, bietet sich hier die Möglichkeit, die eine Kammer 2 der Portionseinheit 1 mit mehreren Zonen unterschiedlicher Reinigungsmittelzusammensetzung auszustatten. Beispielweise können diese Zonen unterschiedlicher Reinigungsmittelzusammensetzung gezielt durch entsprechend geschickte parallele oder sequentielle Befüllung der Kammer 2 der Portionseinheit 1 vor allem mit Reinigungsmittelzusammensetzungen unterschiedlicher Darreichungsform eingestellt werden. Besonders wirkungsvoll gelingt dies, indem das Hauptvolumen 4 und das zumindest eine Nebenvolumen 5-7 mit Reinigungsmittelzusammensetzungen von unterschiedlicher formstabiler Darreichungsform befüllt werden. Beispielsweise können die je nach Anwendungsfall vorhandenen Nebenvolumina 5-7 bevorzugt mit fester, gelartiger oder wachsartiger Reinigungsmittelzusammensetzung befüllt werden, während das Hauptvolumen mit pulverförmiger Reinigungsmittelzusammensetzung gefüllt wird. Dabei erweist es sich als günstig zunächst die je nach Anwendungsfall vorhandenen Nebenvolumina 5-7 bevorzugt mit fester, gelartiger oder wachsartiger Reinigungsmittelzusammensetzung zu befüllen und erst im Anschluss das Hauptvolumen mit pulverförmiger Reinigungsmittelzusammensetzung zu füllen. Selbstverständlich ist in Abhängigkeit vom jeweiligen Anwendungsfall auch die Kombination von mehreren Reinigungsmittelzusammensetzungen mit anderer, vor allem formstabiler Darreichungsform denkbar. Dies bezieht sich insbesondere auch auf die Verteilung anderer Darreichungsformen auf das Hauptvolumen 4 sowie die einzelnen Nebenvolumina 5-7. Vor allem die Füllung von Hauptvolumen 4 und Nebenvolumina 5-7 mit Reinigungsmittelzusammensetzungen unterschiedlicher formstabiler Darreichungsform sorgt für eine saubere Trennung der einzelnen Zonen unterschiedlicher Reinigungsmittelzusammensetzung innerhalb der Portionseinheit 1. Auf das befüllte Aufnahmevolumen wird anschließend ein Deckelelement 14 aus einem zweiten wasserlöslichen Folienabschnitt aufgelegt. In einem Randbereich wird das Deckelelement 14 mit dem Aufnahmevolumen verschweißt, so dass sich ein in den Figuren 1 und 2 erkennbarer Siegelrand 11 ausbildet. Durch das Verschweißen in einem Randbereich wird die Durchlässigkeit zwischen dem Hauptvolumen 4 und dem mindestens einen Nebenvolumen 5, 6, 7 nicht beeinträchtigt. Abschließend wird die fertige Portionseinheit 1 aus der Tiefziehform entnommen. Auf diesem Wege lassen sich zunächst Portionseinheiten mit besonders ansprechendem Erscheinungsbild erhalten. Weiterhin können die einzelnen Zonen unterschiedlicher Reinigungsmittelzusammensetzung für verschiedene Wirkeffekte der Portionseinheit verantwortlich sein. Beispielsweise kann jede einzelne Reinigungsmittelzusammensetzung gezielt für bestimmte Reinigungseffekte der gesamten Reinigungswirkung ausgelegt werden. Darüber hinaus weisen erfindungsgemäße Portionseinheiten mit entsprechender Gestaltung der Kammerwandung sowie Befüllung mit unterschiedlichen vor allem formstabilen Reinigungsmittelzusammensetzungen eine deutlich erhöhte Festigkeit der gesamten Portionseinheit auf.

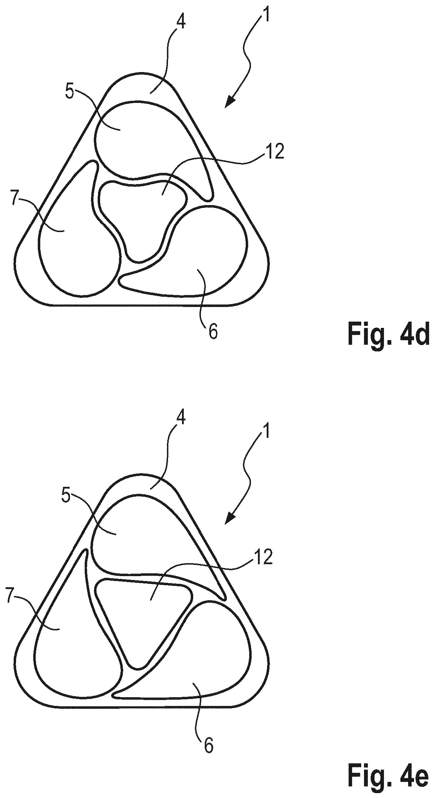

Die Figuren 4a bis 4e zeigen beispielhafte Ausgestaltungen einer erfindungsgemäßen Portionseinheit 1 in schematischer Draufsicht. Die Portionseinheit 1 kann dabei in Draufsicht unterschiedliche Grundformen aufweisen. So zeigen die Figuren 4a und 4b jeweils eine kreisförmige Grundform, während die Figur 4c eine rechteckige, im Wesentlichen quadratische Grundform aufweist. Die Figuren 4d und 4e zeigen Beispiele einer dreieckigen Grundform der Portionseinheit 1. Unabhängig von der Grundform der Portionseinheit 1 kann eine unterschiedliche Anzahl von Nebenvolumina 5, 6, 7, 12 und 13 vorgesehen sein und diese können unterschiedlich angeordnet und ausgeformt sein. So kann die Form eines Nebenvolumens beispielsweise tropfenförmig oder sichelförmig sein. Dabei können drei oder vier tropfen- oder sichelförmige Nebenvolumina 5, 6, 7, 13 vorgesehen sein, die um ein weiteres, zentral in der Mitte platziertes Nebenvolumen 12 angeordnet sind. Bei anderen Ausführungen kann die Mitte, wie in Figur 4a gezeigt, jedoch auch frei bleiben. Auch Ausführungen mit nur einem oder zwei Nebenvolumina sind möglich. Um zu gewährleisten, dass die Nebenvolumina beim Einsatz in einer Wasch- oder Geschirrspülmaschine optimal vom wasserbasierter Reinigungsflotte umspült werden, sind die Nebenvolumina vorzugsweise so ausgeformt und angeordnet, dass sie in ihrer Gesamtheit keinerlei Spiegelsymmetrie aufweisen. Einzelne Nebenvolumina, wie beispielsweise das Nebenvolumen 12 in den Figuren 4b und 4c, können dabei durchaus eine Spiegelsymmetrie aufweisen, die Gesamtheit der Nebenvolumina ist jedoch vorzugsweise frei von Spiegelsymmetrien.

Anhand eines Vergleichsbeispiels werden nachfolgend die Vorteile der erfindungsgemäßen Portionseinheit gegenüber aus dem Stand der Technik bekannten Portionseinheiten exemplarisch dargelegt.

In einem ersten Schritt wurden hierzu zwei Flüssigkeiten A und B hergestellt. Eine Flüssigphase der Zusammensetzung A wurde hergestellt aus folgenden Inhaltsstoffen:

| **Inhaltsstoff** | **Gew.-%** |
|---|---|
| Propylenglykol | 8,2 |
| Glycerin | 10,5 |
| Optischer Aufheller | 0,6 |
| Lineares Alkylbenzolsulfonat | 22,0 |
| C13/15 Oxoalkohol mit 8 EO | 24,0 |
| Monoethanolamin zur Verseifung | 6,0 |
| C12-18 Seife | 7,5 |
| Polyethylenimin Polymer | 6,0 |
| DTPMPA 7Na | 0,7 |
| Ethanol | 3,0 |
| Soil Release Polymer | 1,4 |
| Parfüm | 1,7 |
| Farbstoff | 0,01 |
| Wasser | 8,39 |

Die Rezepturzusammensetzung A enthält dabei 8,39 Gew.-% Wasser aus Zugabe und Rohstoffen sowie alle Inhaltsstoffangaben als Aktivsubstanz.

Eine Flüssigphase der Zusammensetzung B wurde hergestellt aus folgenden Inhaltsstoffen:

| **Inhaltsstoff** | **Gew.-%** |
|---|---|
| Propylenglykol | 7,8 |
| Glycerin | 10,1 |
| Lineares Alkylbenzolsulfonat | 17,6 |
| C13/15 Oxoalkohol mit 8 EO | 24,0 |
| Monoethanolamin zur Verseifung | 4,8 |
| C12-18 Seife | 6,0 |
| Polyethylenimin Polymer | 6,0 |
| DTPMPA 7Na | 0,7 |
| Ethanol | 3,0 |
| Soil Release Polymer | 1,4 |
| Parfüm | 1,7 |
| Enzymmischung (Protease, Mannanase, Amylase, Cellulase) | 8,5 |
| Farbstoff | 0,01 |
| Wasser | 8,39 |

Die Rezepturzusammensetzung B enthält dabei 8,39 Gew.-% Wasser aus direkter Zugabe und den Rohstoffen mit Ausnahme der Enzymmischung. Der Wassergehalt der Enzymmischung wurde nicht berücksichtigt. Alle Inhaltsstoffangaben liegen als Aktivsubstanz vor mit Ausnahme der Enzymmischung, hier wurde insgesamt 8,5% der kommerziell verfügbaren Enzymlösungen als Mischung zugegeben.

In einem nachfolgenden Schritt wurden unterschiedliche wasserlösliche Portionseinheiten V2, V3, E1, E2 hergestellt und mit den Flüssigkeiten A und B befüllt. Als Material für die Kammerwandung der Portionseinheiten wurde für alle unterschiedlichen Portionseinheiten jeweils der wasserlösliche Film Aicello Solublon GA des Anbieters Aicello verwendet. Die einzelnen Filmdicken und Abmessungen der Portionseinheiten sind untenstehend tabellarisch aufgeführt.
1. Herstellung von wasserlöslichen Portionseinheiten V2 und V3:
   V2 und V3 sind jeweils Doppelkammerportionseinheiten ausgeführt, bei denen zwei voneinander getrennte Kammern nebeneinander angeordnet sind. Die Portionseinheiten V2 und V3 wurden aus zwei Folienabschnitten in einer Doppelkammerkavität bei einer Tiefziehtemperatur von 102 °C und einer Siegeltemperatur von 150 °C hergestellt. In die erste Kammer wurden 16,5 g der Flüssigkeit A und in die zweite Kammer 8,5 g der Flüssigkeit B eingefüllt.
2. Herstellung von erfindungsgemäßen wasserlöslichen Portionseinheiten E1 und E2:
   E1 und E2 sind jeweils Ein-Kammer-Portionseinheiten mit einem Hauptvolumen und mindestens einem Nebenvolumen gemäß der vorliegenden Erfindung. Die Portionseinheiten E1 und E2 wurden aus zwei Folienabschnitten in einer Form mit abgestuftem Bodenbereich bei einer Tiefziehtemperatur von 102 °C und bei einer Siegeltemperatur von 150 °C hergestellt. In die einzige Kammer wurden 25 g der Flüssigkeit AB eingefüllt, wobei die Flüssigkeit AB die Flüssigkeiten A und B im Verhältnis 2:1 enthält (A:B = 2:1).

Darüber hinaus wurde für das Vergleichsbeispiel eine weitere, kommerziell erhältliche Portionseinheit V1 (Tide Pods 3:1 des Herstellers Procter & Gamble, hergestellt am 12.06.2017) herangezogen, welche als kompaktes Mehr-Kammer-System ausgebildet ist, bei welchem auf einer Basiskammer zwei weitere, jeweils voneinander getrennte Kammern über der Basiskammer angeordnet sind. Die Portionseinheit V1 ist aus drei PVA-Filmabschnitten gebildet und insgesamt mit 24,8 g einer Reinigungsmittelzusammensetzung befüllt, wobei hiervon 21,4 g von der Basiskammer und jeweils 1,7 g von den beiden auf der Basiskammer angeordneten Kammern aufgenommen werden.

Die nachfolgende Tabelle zeigt die Versuchsparameter im Vergleich.

| Portionseinheit | V1 | V2 | V3 | E1 | E2 |
|---|---|---|---|---|---|
| | 3 Kammern übereinander | 2 Kammern nebeneinander | 2 Kammern nebeneinander | 1 Kammer mit Nebenvolumen | 1 Kammer mit Nebenvolumen |
| Füllmenge | 24,8g (21,4g + 2 x 1,7g) | 25,0g (16,5g + 8,5 g) | 25,0g (16,5g + 8,5g) | 25,0g | 25,0g |
| Abmessungen | 50x40 mm | 65x58 mm | 65x58 mm | 54x58 mm | 54x58 mm |
| Foliendicke | 240 µm total (2 Schichten à 75 µm und 1 Schicht à 90 µm) | 75 µm (Deckelelement) und 90 µm (Aufnahmevo lumen) | 70 µm (Deckelelement) und 90 µm (Aufnahmevo lumen) | 75 µm (Deckelelement) und 90 µm (Aufnahmevo lumen) | 70 µm (Deckelelement) und 90 µm (Aufnahmev olumen) |
| Foliengewicht | 0,8g | 0,9 g | 0,86 g | 0,75g | 0,7g |

Zunächst wurden in einem Drucktest mit jeweils 25 Wiederholungen die mechanischen Eigenschaften der Portionseinheiten V1, V2, V3, E1, E2 getestet. Dazu wurden die Portionseinheiten für die Messung 24 Stunden bei 23±1 °C und 50±2% relativer Feuchte konditioniert. Für die Messung wurde eine Zwick Roell Druckprüfmaschine verwendet. Die Portionseinheit wurde mit der größten Oberfläche auf der unteren Platte positioniert und mit einem Druck von 300 N für 30 Sekunden belastet. (Druckrampe: 250 mm/min). Im Drucktest zeigten alle Proben V1, V2, V3, E1, E2 gleichermaßen gute mechanische Eigenschaften alle 25 von 25 Proben erzielen Druckfestigkeiten von über 300 Nm.

Weiterhin wurde die Löslichkeit der einzelnen Portionsbeutel in verschiedenen Tests ermittelt und verglichen, zunächst in einem Labortest bei 2 Temperaturen in einem Becherglas und im Praxistest innerhalb einer Waschmaschine.

Im Rahmen des Labortests wurde die Löslichkeit der Portionseinheiten grundsätzlich mit je 25 Wiederholungen ermittelt, wobei sowohl der Zeitpunkt der ersten Produktfreisetzung als auch die Dauer bis zur vollständigen Auflösung der gesamten Portionseinheit erfasst wurde. Im einzelnen wurden dazu im Rahmen eines ersten Testzyklus in einem 2 Liter Becherglas 1 Liter destilliertes Wasser mit einer Temperatur 20±1°C vorgelegt. Die Portionsbeutel wurden ins Wasser gegeben und gegebenfalls mit einer Stativklammer unter der Wasseroberfläche fixiert, um vergleichbare Bedingungen zu schaffen. Es wurde die Zeit erfasst bis zum ersten Produktaustritt (bei mehreren Kammern wurde die erste Freisetzung einer Reinigungsmittelzusammensetzung gewertet). Im Rahmen eines zweiten Testzyklus wurden in einem 2 Liter Becherglas 1 Liter destilliertes Wasser, jedoch mit einer höheren Temperatur von 28±1°C vorgelegt. Die Portionsbeutel wurden ins Wasser gegeben und gegebenfalls mit einer Stativklammer unter der Wasseroberfläche gehalten, um vergleichbare Bedingungen zu schaffen. Es wurde leicht mit einem Rührstab mit 200 Umdrehungen pro Minute gerührt. Es wurde die Zeit erfasst bis keine sichtbaren Filmbestandteile mehr im Becherglas zu erkennen waren.

Als Ergebnisse werden nachfolgend Durchschnittswerte der 25 Einzelversuche angegeben.

### Ergebnisse Labortest:

Die erste Produktfreisetzung erfolgte im Labortest nach dem ersten Testzyklus für alle Proben in allen 25 Wiederholungen nach mehr als 30 s. Die vollständige Auflösung der jeweiligen Portionseinheiten innerhalb des zweiten Testzyklus erfolgte nach folgenden Zeiten (jeweils Durchschnittswerte aus 25 Wiederholungen):

| | |
|---|---|
| V1: | 4:55 Minuten |
| V2: | 4:38 Minuten |
| V3: | 4:25 Minuten |
| E1: | 4:22 Minuten |
| E2: | 4:14 Minuten |

Damit erfolgte die vollständige Auflösung der erfindungsgemäßen Portionseinheiten E1 und E2 deutlich schneller (im Durchschnitt mindestens 10 Sekunden) als bei den Vergleichsproben V2-V3 mit gleichem Filmtyp und gleicher Schichtdicke und erheblich schneller als bei der Vergleichsprobe V1 (im Durchschnitt mindestens 30 Sekunden).

Darüber hinaus wurden die Proben im Hinblick auf mögliche Produktrückstände einem Praxistest innerhalb einer Waschmaschine unterzogen. Hierfür wurden ebenfalls die bereits beschriebenen Proben V1, V2, V3, E1, E2 verwendet, die für 6 Wochen bei Raumtemperatur gealtert waren. Der Waschmaschinentest wurde mit allen Proben jeweils mit 25 Wiederholungen durchlaufen. Das Ergebnis wurde jeweils nach 10 Minuten Waschzeit sowie nach Beendigung des Waschprogramms beurteilt. Der Waschmaschinentest wurde im Einzelnen in einer Waschmaschine vom Typ Miele W1714 durchgeführt, als Programm wurde ein 30°C-Baumwollprogramm gewählt. Die Programmlaufzeit betrug 2 Stunden und 5 Minuten, die Waschmaschine war mit 3,5 kg Baumwollwäsche beladen. Die Portionseinheiten V1, V2, V3, E1, E2 wurden jeweils zu Beginn unter der Wäsche positioniert.

Der Waschmaschinentest lieferte dabei folgende Ergebnisse:

| | |
|---|---|
| V1: | Nach 10 Minuten Waschzeit wurden in 7 von 25 Wiederholungen Rückstände festgestellt, nach Beendigung des Waschprogramms in 3 von 25 Wiederholungen. |
| V2: | Nach 10 Minuten Waschzeit wurden in 8 von 25 Wiederholungen Rückstände festgestellt, nach Beendigung des Waschprogramms in 4 von 25 Wiederholungen. |
| V3: | Nach 10 Minuten Waschzeit wurden in 6 von 25 Wiederholungen Rückstände festgestellt, nach Beendigung des Waschprogramms in 2 von 25 Wiederholungen. |
| E1: | Nach 10 Minuten Waschzeit wurden in 4 von 25 Wiederholungen Rückstände festgestellt, nach Beendigung des Waschprogramms in keiner der 25 Wiederholungen. |
| E2: | Nach 10 Minuten Waschzeit wurden in 5 von 25 Wiederholungen Rückstände festgestellt, nach Beendigung des Waschprogramms in keiner der 25 Wiederholungen. |

Dabei fanden sich für alle Probevarianten Rückstände der Reinigungsmittelzusammensetzung bzw. Folienrückstände jeweils im Schlitz der Gummimanschette oder auf der Gummimanschette im Bereich der Ladeluke der Waschmaschine.

Die erfindungsgemäßen Portionseinheiten E1, E2 zeigten somit im Vergleich die besten Rückstandswerte im Waschmaschinentest, insbesondere zeigten sie als einzige Probenvarianten keinerlei Produkt- und/oder Folienrückstände nach Beendigung des Waschprogramms.

## Patentansprüche

1. Portionseinheit (1) eines Reinigungsmittels, umfassend zumindest eine Reinigungsmittelzusammensetzung sowie eine die Reinigungsmittelzusammensetzung aufnehmende Kammer (2) mit einer die Kammer begrenzenden Kammerwandung (3) einer Schichtdicke D, wobei die Kammer (2) ein Hauptvolumen (4) und mindestens ein Nebenvolumen (5, 6, 7, 12, 13) umfasst, **dadurch gekennzeichnet, dass** die Reinigungsmittelzusammensetzung frei von dem Hauptvolumen (4) in das mindestens eine Nebenvolumen (5, 6, 7, 12, 13) eintreten kann und umgekehrt und dass die Kammerwandung (3) in einem Übergangsbereich (A) zwischen dem Hauptvolumen (4) und dem mindestens einen Nebenvolumen (5, 6, 7, 12, 13) im Wesentlichen stufenförmig ausgebildet ist.

2. Portionseinheit (1) eines Reinigungsmittels nach Anspruch 1, **dadurch gekennzeichnet, dass** das mindestens eine Nebenvolumen (5, 6, 7, 12, 13) als Ausstülpung in der Kammerwandung (3) ausgebildet ist und die maximale Höhe H der Ausstülpung mindestens das Fünffache der Schichtdicke D der Kammerwandung (3) beträgt.

3. Portionseinheit (1) eines Reinigungsmittels nach Anspruch 2, **dadurch gekennzeichnet, dass** die maximale Höhe H der Ausstülpung mindestens das zehnfache der Schichtdicke D der Kammerwandung (3) beträgt.

4. Portionseinheit (1) eines Reinigungsmittels nach einem der Ansprüche 1 bis 3, **dadurch gekennzeichnet, dass** das mindestens eine Nebenvolumen (5, 6, 7, 12, 13) einen Anteil von 1 - 30 % eines Gesamtvolumens, bestehend aus dem Hauptvolumen (4) und dem mindestens einen Nebenvolumen (5, 6, 7, 12, 13), umfasst.

5. Portionseinheit (1) eines Reinigungsmittels nach Anspruch 4, **dadurch gekennzeichnet, dass** das mindestens eine Nebenvolumen (5, 6, 7, 12, 13) einen Anteil von 3 - 15% des Gesamtvolumens umfasst.

6. Portionseinheit (1) eines Reinigungsmittels nach einem der Ansprüche 1 bis 5, **dadurch gekennzeichnet, dass** die Kammer (2) zwei oder mehr Nebenvolumina (5, 6, 7, 12, 13) umfasst.

7. Portionseinheit (1) eines Reinigungsmittels nach einem der Ansprüche 1 bis 6, **dadurch gekennzeichnet, dass** die Gesamtheit der Nebenvolumina (5, 6, 7, 12, 13) derart ausgeformt ist, dass sie keinerlei Spiegelsymmetrie aufweist.

8. Portionseinheit (1) eines Reinigungsmittels nach einem der Ansprüche 1 bis 7, **dadurch gekennzeichnet, dass** die Portionseinheit (1) eine dreieckige oder kreisförmige oder rechteckige Grundform aufweist.

9. Portionseinheit (1) eines Reinigungsmittels nach einem der Ansprüche 1 bis 8, **dadurch gekennzeichnet, dass** die Kammerwandung (3) ein wasserlösliches Material umfasst.

10. Portionseinheit (1) eines Reinigungsmittels nach Anspruch 9, **dadurch gekennzeichnet, dass** das wasserlösliche Material einen Polyvinylalkohol-Copolymer umfasst.

11. Portionseinheit (1) eines Reinigungsmittels nach einem der Ansprüche 1 bis 10, **dadurch gekennzeichnet, dass** die Kammer (2) mit mehreren Reinigungsmittelzusammensetzungen befüllt ist.

12. Portionseinheit (1) eines Reinigungsmittels nach Anspruch 11, **dadurch gekennzeichnet, dass** die Kammer (2) mit mehreren Reinigungsmittelzusammensetzungen unterschiedlicher Darreichungsform befüllt ist.

13. Portionseinheit (1) eines Reinigungsmittels nach einem der Ansprüche 11-12, **dadurch gekennzeichnet, dass** das Hauptvolumen (4) mit einer ersten Reinigungsmittelzusammensetzung mit einer ersten Darreichungsform und das zumindest eine Nebenvolumen (5, 6, 7, 12, 13) mit einer weiteren Reinigungsmittelzusammensetzung mit einer zur ersten unterschiedlichen zweiten Darreichungsform befüllt ist.

14. Portionseinheit (1) eines Reinigungsmittels nach einem der Ansprüche 1 bis 13, **dadurch gekennzeichnet, dass** die Portionseinheit (1) in einem thermischen Vakuum-Tiefziehverfahren hergestellt wird.

15. Verfahren zur Herstellung einer Portionseinheit (1) eines Reinigungsmittels gemäß eines der Ansprüche 1 bis 14, umfassend die folgenden Schritte:
- Vorheizen eines ersten wasserlöslichen Folienabschnitts über einer Tiefziehform (8), deren Boden (9) mindestens eine Vertiefung (10) aufweist;
- Anlegen eines Unterdrucks an die Tiefziehform (8), dadurch Einsaugen des vorgeheizten Folienabschnittes in die Tiefziehform (8) und Ausbildung eines Aufnahmevolumens aus dem ersten wasserlöslichen Folienabschnitt, wobei das Aufnahmevolumen ein Hauptvolumen (4) und mindestens ein Nebenvolumen (5, 6, 7, 12, 13) umfasst;
- Einfüllen zumindest einer Reinigungsmittelzusammensetzung in das Aufnahmevolumen;
- Auflegen eines Deckelelements (14) aus einem zweiten wasserlöslichen Folienabschnitt auf das befüllte Aufnahmevolumen;
- Verschweißen des Deckelelements (14) durch Feuchtigkeit und/oder Temperatur mit dem Aufnahmevolumen in einem Randbereich, derart, dass das Hauptvolumen (4) und das mindestens eine Nebenvolumen (5, 6, 7, 12, 13) miteinander kommunizieren können;
- Herausnehmen der Portionseinheit (1) aus der Tiefziehform.

## Claims

1. A portion unit (1) of a cleaning agent, comprising at least one cleaning agent composition and a chamber (2) which receives the cleaning agent composition and has a chamber wall (3) delimiting the chamber and having a layer thickness D, the chamber (2) comprising a main volume (4) and at least one auxiliary volume (5, 6, 7, 12, 13), **characterized in that** the cleaning agent composition can freely enter the at least one auxiliary volume (5, 6, 7, 12, 13) from the main volume (4) and vice versa, and **in that** the chamber wall (3) is formed, in a transition region (A), between the main volume (4) and the at least one auxiliary volume (5, 6, 7, 12, 13) in a substantially stepped manner.

2. The portion unit (1) of a cleaning agent according to claim 1,
**characterized in that** the at least one auxiliary volume (5, 6, 7, 12, 13) is designed as a protuberance in the chamber wall (3) and the maximum height H of the protuberance is at least five times the layer thickness D of the chamber wall (3).

3. The portion unit (1) of a cleaning agent according to claim 2,
**characterized in that** the maximum height H of the protuberance is at least ten times the layer thickness D of the chamber wall (3).

4. The portion unit (1) of a cleaning agent according to one of claims 1 to 3,
**characterized in that** the at least one auxiliary volume (5, 6, 7, 12, 13) comprises a proportion of 1-30% of a total volume, consisting of the main volume (4) and the at least one auxiliary volume (5, 6, 7, 12, 13).

5. The portion unit (1) of a cleaning agent according to claim 4, **characterized in that** the at least one auxiliary volume (5, 6, 7, 12, 13) comprises a proportion of 3-15% of the total volume.

6. The portion unit (1) of a cleaning agent according to one of claims 1 to 5, **characterized in that** the chamber (2) comprises two or more auxiliary volumes (5, 6, 7, 12, 13).

7. The portion unit (1) of a cleaning agent according to one of claims 1 to 6, **characterized in that** the entirety of the auxiliary volumes (5, 6, 7, 12, 13) is shaped such that it has no mirror symmetry.

8. The portion unit (1) of a cleaning agent according to one of claims 1 to 7, **characterized in that** the portion unit (1) has a triangular or circular or rectangular main shape.

9. The portion unit (1) of a cleaning agent according to one of claims 1 to 8, **characterized in that** the chamber wall (3) comprises a water-soluble material.

10. The portion unit (1) of a cleaning agent according to claim 9,
**characterized in that** the water-soluble material comprises a polyvinyl alcohol copolymer.

11. The portion unit (1) of a cleaning agent according to one of claims 1 to 10, **characterized in that** the chamber (2) is filled with a plurality of cleaning agent compositions.

12. The portion unit (1) of a cleaning agent according to claim 11, **characterized in that** the chamber (2) is filled with a plurality of cleaning agent compositions of different dosage forms.

13. The portion unit (1) of a cleaning agent according to one of claims 11-12, **characterized in that** the main volume (4) is filled with a first cleaning agent composition having a first dosage form and the at least one auxiliary volume (5, 6, 7, 12, 13) is filled with a further cleaning agent composition having a second dosage form which is different from the first.

14. The portion unit (1) of a cleaning agent according to one of claims 1 to 13, **characterized in that** the portion unit (1) is produced in a thermal vacuum thermoforming method.

15. A method for producing a portion unit (1) of a cleaning agent according to one of claims 1 to 14, comprising the following steps:
- preheating a first water-soluble film portion over a thermoforming mold (8), of which the bottom (9) has at least one recess (10);
- applying a negative pressure to the thermoforming mold (8), thereby sucking in the preheated film portion into the thermoforming mold (8) and forming a receiving volume consisting of the first water-soluble film portion, wherein the receiving volume comprises a main volume (4) and at least one auxiliary volume (5, 6, 7, 12, 13);
- filling at least one cleaning agent composition into the receiving volume;
- placing a cover element (14) consisting of a second water-soluble film portion on the filled receiving volume;
- welding the cover element (14) to the receiving volume in an edge region by means of moisture and/or temperature such that the main volume (4) and the at least one auxiliary volume (5, 6, 7, 12, 13) can communicate with one another; and
- removing the portion unit (1) from the thermoforming mold.

## Revendications

1. Dose unitaire (1) d'un produit de nettoyage, comprenant au moins une composition de produit de nettoyage ainsi qu'une chambre (2) recevant la composition de produit de nettoyage, comportant une paroi de chambre (3), délimitant la chambre, d'une épaisseur de couche D, la chambre (2) comprenant un volume principal (4) et au moins un volume secondaire (5, 6, 7, 12, 13), **caractérisée en ce que** la composition de produit de nettoyage peut pénétrer dans l'au moins un volume secondaire (5, 6, 7, 12, 13) libre du volume principal (4) et vice versa **et en ce que** la paroi de chambre (3) est réalisée sensiblement en forme de pas dans une région de transition (A) entre le volume principal (4) et l'au moins un volume secondaire (5, 6, 7, 12, 13).

2. Dose unitaire (1) d'un produit de nettoyage selon la revendication 1, **caractérisée en ce que** l'au moins un volume secondaire (5, 6, 7, 12, 13) est réalisé comme une protubérance dans la paroi de chambre (3) et la hauteur maximale H de la protubérance représente au moins cinq fois l'épaisseur de couche D de la paroi de chambre (3).

3. Dose unitaire (1) d'un produit de nettoyage selon la revendication 2, **caractérisée en ce que** la hauteur maximale H de la protubérance représente au moins dix fois l'épaisseur de couche D de la paroi de chambre (3).

4. Dose unitaire (1) d'un produit de nettoyage selon l'une quelconque des revendications 1 à 3, **caractérisée en ce que** l'au moins un volume secondaire (5, 6, 7, 12, 13) comprend une part de 1 - 30 % d'un volume total, constitué par le volume principal (4) et l'au moins un volume secondaire (5, 6, 7, 12, 13).

5. Dose unitaire (1) d'un produit de nettoyage selon la revendication 4, **caractérisée en ce que** l'au moins un volume secondaire (5, 6, 7, 12, 13) comprend une part de 3 - 15 % du volume total.

6. Dose unitaire (1) d'un produit de nettoyage selon l'une des revendications 1 à 5, **caractérisée en ce que** la chambre (2) comprend deux volumes secondaires (5, 6, 7, 12, 13) ou plus.

7. Dose unitaire (1) d'un produit de nettoyage selon l'une des revendications 1 à 6, **caractérisée en ce que** la totalité des volumes secondaires (5, 6, 7, 12, 13) est façonnée de manière telle qu'elle ne présente aucune symétrie miroir.

8. Dose unitaire (1) d'un produit de nettoyage selon l'une des revendications 1 à 7, **caractérisée en ce que** la dose unitaire (1) présente une forme de base triangulaire ou circulaire ou rectangulaire.

9. Dose unitaire (1) d'un produit de nettoyage selon l'une des revendications 1 à 8, **caractérisée en ce que** la paroi de chambre (3) comprend un matériau soluble dans l'eau.

10. Dose unitaire (1) d'un produit de nettoyage selon la revendication 9, **caractérisée en ce que** le matériau soluble dans l'eau comprend un copolymère de poly(alcool vinylique).

11. Dose unitaire (1) d'un produit de nettoyage selon l'une des revendications 1 à 10, **caractérisée en ce que** la chambre (2) est remplie avec plusieurs compositions de produit de nettoyage.

12. Dose unitaire (1) d'un produit de nettoyage selon la revendication 11, **caractérisée en ce que** la chambre (2) est remplie avec plusieurs compositions de produit de nettoyage de forme de dosage différente.

13. Dose unitaire (1) d'un produit de nettoyage selon l'une des revendications 11 à 12, **caractérisée en ce que** le volume principal (4) est rempli avec une première composition de produit de nettoyage d'une première forme de dosage et l'au moins un volume secondaire (5, 6, 7, 12, 13) est rempli avec une autre composition de produit de nettoyage d'une seconde forme de dosage différente de la première.

14. Dose unitaire (1) d'un produit de nettoyage selon l'une des revendications 1 à 13, **caractérisée en ce que** la dose unitaire (1) est fabriquée dans un procédé d'emboutissage profond thermique sous vide.

15. Procédé de fabrication d'une dose unitaire (1) d'un produit de nettoyage selon l'une des revendications 1 à 14, comprenant les étapes suivantes :
- préchauffage d'une première section de feuille soluble dans l'eau par l'intermédiaire d'un moule d'emboutissage profond (8), dont le fond (9) présente au moins un creux (10) ;
- application d'une dépression au niveau du moule d'emboutissage profond (8) et ainsi aspiration de la section de feuille préchauffée dans le moule d'emboutissage profond (8) et formation d'un volume de réception constitué par la première section de feuille soluble dans l'eau, le volume de réception comprenant un volume principal (4) et au moins un volume secondaire (5, 6, 7, 12, 13) ;
- introduction d'au moins une composition de produit de nettoyage dans le volume de réception ;
- pose d'un élément de recouvrement (14) composé d'une seconde section de film soluble dans l'eau sur le volume de réception rempli ;
- soudage de l'élément de recouvrement (14) par l'humidité et/ou la température avec le volume de réception dans une région de bord, de telle sorte que le volume principal (4) et l'au moins un volume secondaire (5, 6, 7, 12, 13) puissent communiquer l'un avec l'autre ;
- prélèvement de la dose unitaire (1) du moule d'emboutissage profond.
